Europäisches Patentamt

European Patent Office

Office européen des brevets

(19)

(11) **EP 0 673 522 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(21) Anmeldenummer: **94901746.1**

(22) Anmeldetag: **10.12.1993**

(51) Int Cl.6: **G06F 7/60**

(86) Internationale Anmeldenummer:
**PCT/DE93/01184**

(87) Internationale Veröffentlichungsnummer:
**WO 94/14113 (23.06.1994 Gazette 1994/14)**

(54) **EINRICHTUNG ZUR VERVOLLSTÄNDIGUNG EINER UNVOLLSTÄNDIGEN REGELBASIS EINES FUZZY-REGLERS**

DEVICE FOR COMPLETING AN INCOMPLETE RULEBASE WITHIN A FUZZY-REGULATOR

DISPOSITIF POUR COMPLETER UNE BASE DE REGLES INCOMPLETE DANS UN REGULATEUR FLOU

(84) Benannte Vertragsstaaten:
**AT BE CH DE FR GB IT LI NL SE**

(30) Priorität: **11.12.1992 DE 4241920**

(43) Veröffentlichungstag der Anmeldung:
**27.09.1995 Patentblatt 1995/39**

(73) Patentinhaber: **SIEMENS AKTIENGESELLSCHAFT**
**80333 München (DE)**

(72) Erfinder:
- **LINZENKIRCHNER, Edmund**
  **D-76344 Eggenstein-Leopoldshafen (DE)**
- **PREUSS, Hans-Peter**
  **D-76189 Karlsruhe (DE)**

(56) Entgegenhaltungen:
**EP-A- 0 513 689**

- **AUTOMATISIERUNGSTECHNISCHE PRAXIS - ATP Bd. 34, Nr. 5 , 1992 , MUNCHEN DE Seiten 239 - 246 XP000270923 H-P PREUSS 'Fuzzy Control - heuristische Regelung mittels unscharfer Logik' in der Anmeldung erwähnt**
- **IEEE TRANSACTIONS ON SYSTEMS, MAN AND CYBERNETICS Bd. 20, Nr. 5 , 1990 , NEW YORK US Seiten 1115 - 1124 XP000150621 LIANG-JONG HUANG ET AL. 'A Self-Paced Fuzzy Tracking Controller for Two-Dimensional Motion Control'**

**Beschreibung**

Die Erfindung betrifft eine Einrichtung zur Vervollständigung einer unvollständigen Regelbasis eines Fuzzy-Reglers mit mindestens einer Ein- und Ausgangsgröße.

Die Grundlagen der Fuzzy-Regler sind z. B. aus dem Aufsatz "Fuzzy Control - heuristische Regelung mittels unscharfer Logik" von Hans-Peter Preuß, veröffentlicht in "atp" (1992) 4, Seiten 176 bis 183, und "atp" (1992) 5, Seiten 239 bis 246, bekannt. Die dort beschriebenen Fuzzy-Regler werden zur Regelung, Steuerung, Prozeßoptimierung sowie für heuristische Strategien mit den Mitteln der Fuzzy-Logik eingesetzt. In einer Fuzzy-Regelung kann die Anzahl der Ein- und Ausgangsgrößen des Fuzzy-Reglers grundsätzlich beliebig sein. Zum Entwurf eines Fuzzy-Reglers werden zunächst die numerischen Wertebereiche der Ein- und Ausgangsgrößen durch linguistische Werte, wie "klein", "mittel" oder "groß", qualitativ charakterisiert. Jeder linguistische Wert wird durch eine Zugehörigkeitsfunktion beschrieben. Diese quantifiziert die qualitative Aussage eines linguistischen Wertes in der Weise, daß sie ihren Wahrheitswert für jeden auftretenden zahlenmäßigen Wert einer Prozeßgröße angibt. Durch diesen Vorgang, der auch als Fuzzifizierung bezeichnet wird, wird der Betriebsbereich des betrachteten Prozesses in "unscharfe" Teilbereiche unterteilt. Die Anzahl der Teilbereiche entspricht der Anzahl linguistischer Werte einer Eingangsgröße, bei mehreren Eingangsgrößen der Anzahl der Kombinationsmöglichkeiten von linguistischen Werten verschiedener Eingangsgrößen. Für jeden dieser Teilbereiche oder auch zusammengefaßt für mehrere Teilbereiche wird die Regelungsstrategie durch WENN-DANN-Regeln bestimmt. Diese Regeln werden in einer Regelbasis hinterlegt. In jeder Regel wird für eine Kombination von linguistischen Werten der Eingangsgröße, z. B. durch eine Verknüpfung mit den Operatoren "UND" oder "ODER", im Bedingungsteil eine Folgerung als linguistischer Wert für jeweils eine der Ausgangsgrößen bestimmt. Zur Berechnung der Wahrheitswerte der Bedingungsteile werden die aus den Zugehörigkeitsfunktionen der einzelnen Eingangsgrößen ermittelten Wahrheitswerte entsprechend den in den Regeln verwendeten Operatoren verknüpft. In der als Inferenz bezeichneten Berechnung der Folgerungen der einzelnen Regeln wird beispielsweise die in einer Regel durch den entsprechenden linguistischen Wert benannte Zugehörigkeitsfunktion der Ausgangsgröße auf den Wahrheitswert begrenzt, den der Bedingungsteil der Regel liefert. Bei der sogenannten Komposition werden die Wirkungen der Regeln bezüglich einer Ausgangsgröße einander überlagert, z. B. durch eine Maximalwertbildung aller Zugehörigkeitsfunktionen der Ausgangsgröße. Zum Schluß erfolgt die als Defuzzifizierung bezeichnete Berechnung des Wertes der Ausgangsgröße. Dies geschieht z. B. durch Berechnung der Lage des Schwerpunktes der von allen begrenzten Zugehörigkeitsfunktionen eingeschlossenen Fläche über dem Wertebereich der Ausgangsgröße.

Eine Regelbasis ist unvollständig, wenn nicht jeder der obengenannten Teilbereiche des Prozesses im Bedingungsteil einer Regel explizit aufgeführt wird. Andererseits muß nicht jeder linguistische Wert der Ausgangsgröße in einer Regel als Folgerung definiert sein. Dabei ist es von Nachteil, daß in den Betriebszuständen, die nicht durch eine Regel erfaßt wurden, sich für die Regelung ungünstige Ausgangsgrößen einstellen können.

Der Erfindung liegt die Aufgabe zugrunde eine Einrichtung für einen Fuzzy-Regler zu finden, mit der auf einfache Weise eine unvollständige Regelbasis vervollständigt wird und die einen Fuzzy-Regler liefert, der somit keine Instabilitäten im Regelkreis verursacht.

Zur Lösung dieser Aufgabe weist die neue Einrichtung die im Anspruch 1 angegebenen Merkmale auf. Vorteilhafte Weiterbildungen der Einrichtung sind in den Unteransprüchen 2 bis 5 angegeben. Mit der neuen Einrichtung ist erfindungsgemäß nach Anspruch 6 ein Fuzzy-Regler erhältlich, der ein günstiges Verhalten im Regelkreis aufweist.

Anhand der Zeichnungen, in denen Ausführungsbeispiele der Erfindung dargestellt sind, werden im folgenden die Erfindung sowie Vorteile und Ausgestaltungen näher erläutert.

Es zeigen:

Figur 1    ein Blockschaltbild eines Fuzzy-Reglers mit zwei Ein- und einer Ausgangsgröße,

Figur 2    Zugehörigkeitsfunktionen für die Ein- und Ausgangsgrößen,

Figur 3    ein Beispiel für eine unvollständige Regelbasis,

Figur 4    das Ergebnis der Inferenz für die einzelnen Regeln bei unvollständiger Regelbasis,

Figur 5    das Ergebnis der Inferenz mit einer impliziten Regel als Ersatz für eine fehlende Regel,

Figur 6    die implizite Regel nach Figur 5, ergänzt um eine zusätzliche Bewertung,

Figur 7    die implizite Regel nach Figur 5, kombiniert mit einer expliziten·Regel, und

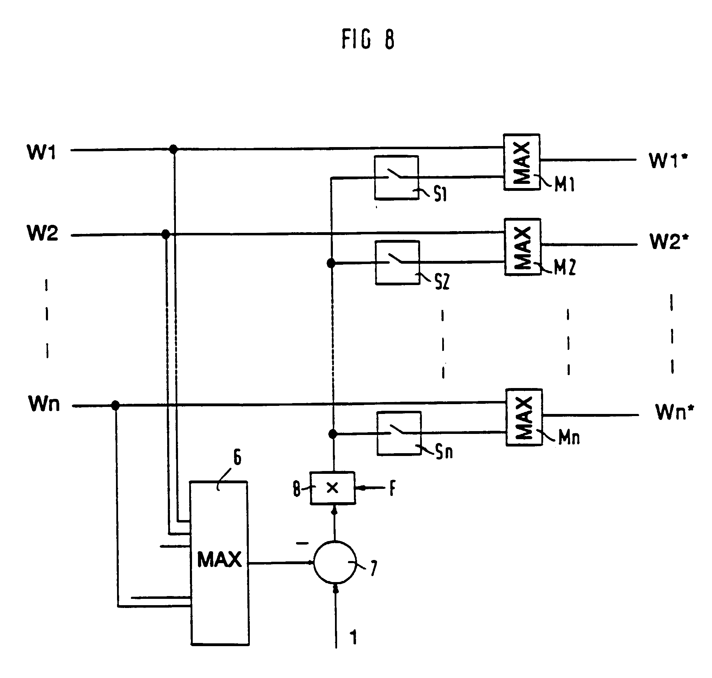

Figur 8    eine universelle Struktur einer impliziten Regel.

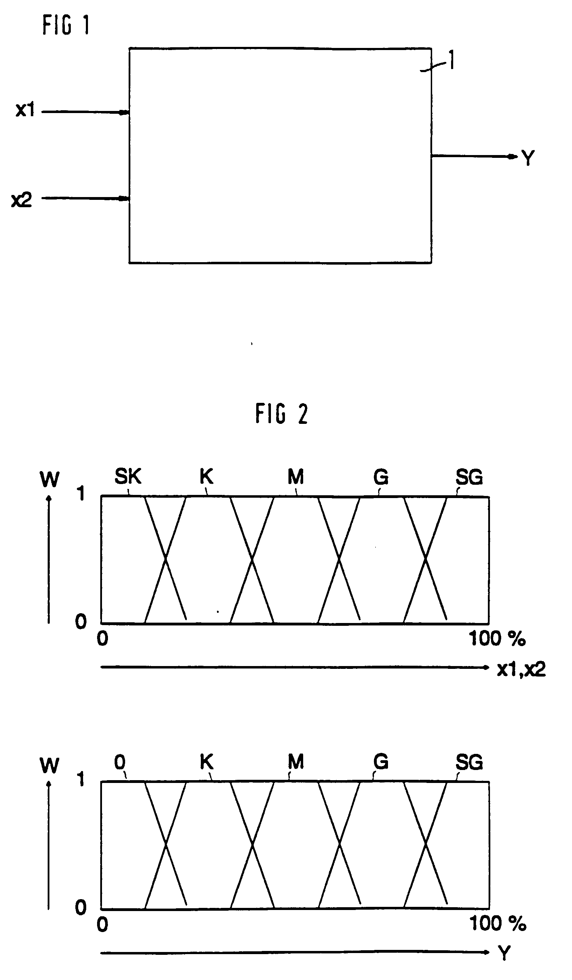

In Figur 1 ist ein Fuzzy-Regler 1 mit zwei Eingangsgrößen $x1$ und $x2$ sowie einer Ausgangsgröße $y$ dargestellt. Figur 2 zeigt die Zugehörigkeitsfunktionen dieser Prozeßgrößen für die linguistischen Variablen SK (sehr klein), K (klein), M (mittel), G (groß), SG (sehr groß) bzw. 0, K (klein), M (mittel), G (groß) und SG (sehr groß). Über die Zugehörigkeitsfunktionen wird z. B. der Wahrheitswert W der Aussage "$x1$ = K" ermittelt, der für den Wert 25 % der Eingangsgröße $x1$ den Betrag 1 hat, dagegen für den größten Wert von $x1$ gleich 0 ist.

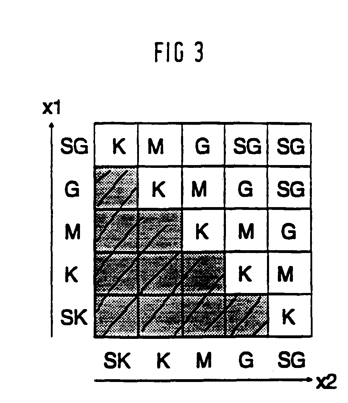

Die Regelbasis kann für dieses Ausführungsbeispiel mit nur zwei Eingangsgrößen $x1$, $x2$ in einer Matrix entsprechend Figur 3 dargestellt werden. In dieser Matrix sind den jeweiligen Kombinationen von linguistischen Werten der Eingangsgrößen linguistische Werte für die Ausgangsgröße zugeordnet. Z. B. lautet eine der Regeln dieser Regelbasis: WENN (x1 = SG UND (x2 = G ODER x2 = SG) ODER (x1 = G UND x2 = SG)) DANN y = SG. In den schraffierten Bereichen im linken unteren Teil der Matrix soll der Wert der Ausgangsgröße y den linguistischen Wert 0 annehmen. Hierfür könnte natürlich auch eine Regel explizit angegeben werden. In diesem Ausführungsbeispiel wird aber angenommen, daß eine solche Regel nicht existiert. Dann ist für diese Bereiche kein definiertes Verhalten des Fuzzy-Reglers zu erwarten.

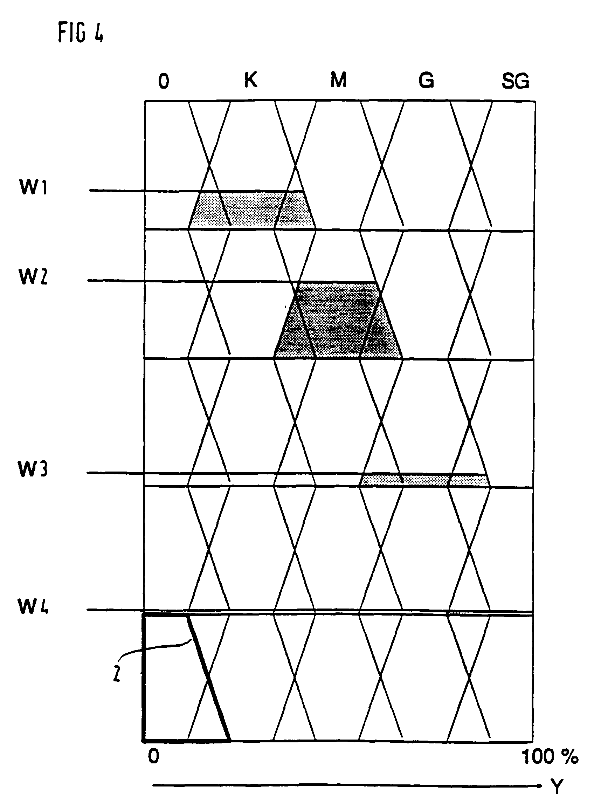

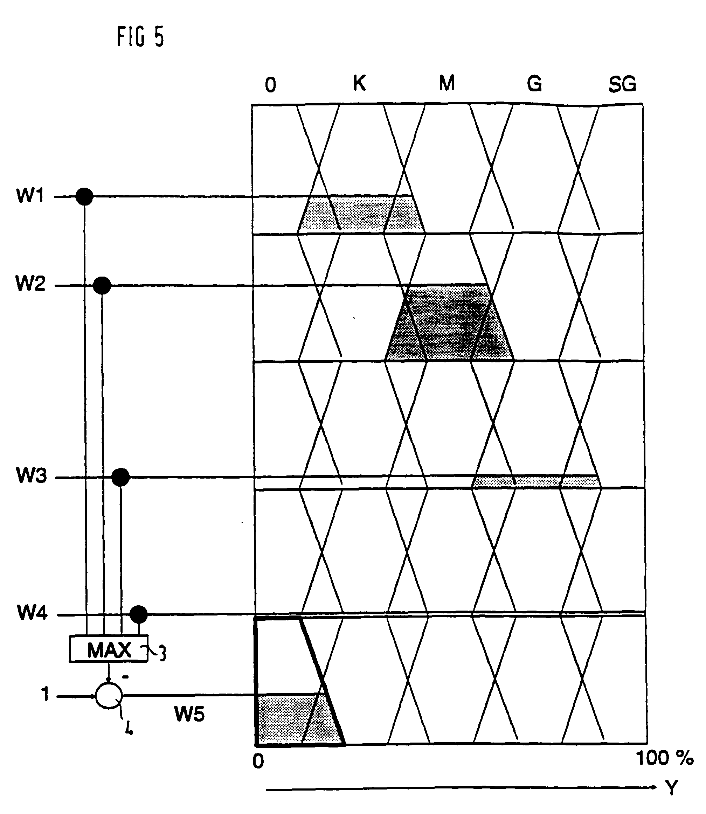

Auch das Ergebnis der Inferenz nach Figur 4 zeigt, daß bei den beispielhaft für einen Prozeßzustand dargestellten Zugehörigkeitsfunktionen der Ausgangsgröße y die Zugehörigkeitsfunktion 2 für den linguistischen Wert 0, die in Figur 4 fett gezeichnet ist, keinen Wahrheitswert liefert. Dagegen werden durch die Inferenz Wahrheitswerte W1, W2, W3 und W4 für die linguistischen Werte K, M, G und SG festgelegt. Wenn allerdings alle explizit formulierten Regeln für diese linguistischen Werte der Ausgangsgröße den Wahrheitswert 0 liefern, ist ein definiertes Ausgangssignal y des Fuzzy-Reglers durch eine implizite Regel gemäß Figur 5 zu erhalten. Bei der Darstellung in Figur 5 wurde derselbe Betriebszustand wie in Figur 4 gewählt. Erfindungsgemäß werden die Wahrheitswerte W1, W2, W3 und W4 der vorhandenen expliziten Regeln zur Maximalwertauswahl einem Maximalwertbildner 3 zugeführt, an dessen Ausgang der größte der durch die expliziten Regeln berechneten Wahrheitswerte ansteht. Durch Subtraktion dieses Maximalwertes von Eins in einem Subtrahierer 4 wird das Komplement des Ausgangswertes des Maximalwertbildners 3 berechnet. In diesem Ausführungsbeispiel wird mit dem so ermittelten Wahrheitswert W5 die nicht durch explizite Regeln angesprochene Zugehörigkeitsfunktion der Ausgangsgröße für den linguistischen Wert 0 entsprechend den Inferenzmechanismen des Fuzzy-Reglers behandelt. Diese implizite Regel hat den Vorteil, daß der angesprochene linguistische Wert 0 der Ausgangsgröße kontinuierlich in dem Maße aktiv wird, in dem die Wirksamkeit der expliziten Regeln sich verringert. Dieser Vorteil macht sich vor allem in den Bereichen in Figur 3 bemerkbar, in denen sich die Zugehörigkeitsfunktionen der Eingangsgrößen x1 und x2 aufgrund ihrer Unschärfe an den Grenzen zu dem schraffierten Bereich überlappen. In einer anderen Ausführungsform der Erfindung kann auch statt eines linguistischen Wertes direkt ein numerischer Wert der Ausgangsgröße y in den Führungsteil der impliziten Regel eingetragen werden.

Die implizite Regel nach Figur 5 kann auch mathematisch beschrieben werden durch die Formel:

$$W_j = 1 - \max(W_i),$$

mit

$i = 1, ..., n, i \neq j,$

n - Anzahl der linguistischen Werte der Ausgangsgröße und

$W_j$ - Wahrheitswert, den die implizite Regel für den j-ten linguistischen Wert der Ausgangsgröße liefert.

Die Formel ist allgemein gewählt, so daß die implizite Regel nicht nur für den linguistischen Wert 0, sondern auch zur Berechnung eines beliebigen anderen linguistischen Wertes der Ausgangsgröße verwendet werden kann.

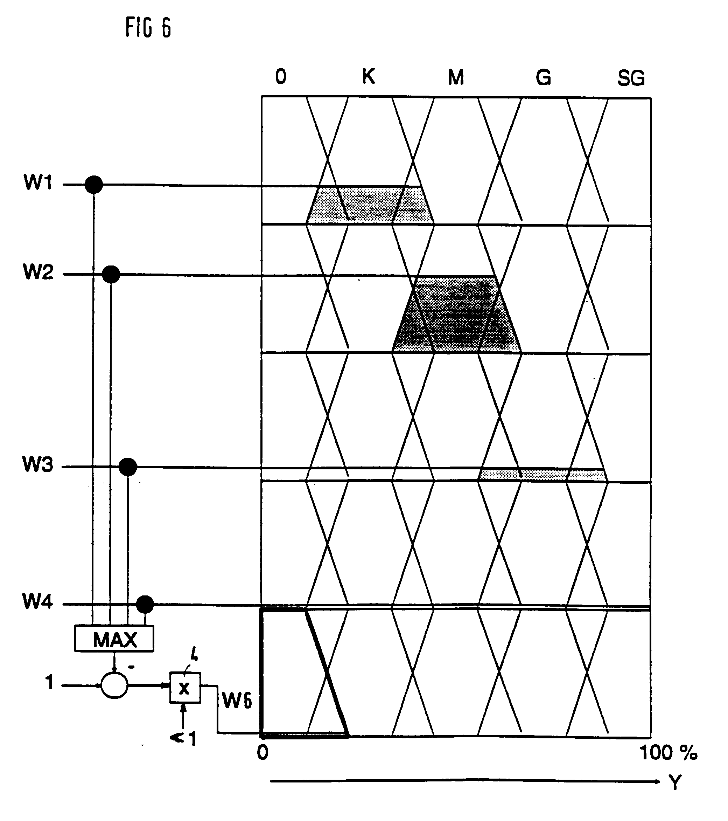

Die in Figur 5 gezeigte implizite Regel liefert einen Wahrheitswert, der größer als Null ist, sobald die explizite Regel, welche den höchsten Wahrheitswert erzeugt, einen Wahrheitswert, der kleiner als Eins ist, feststellt. Dies kann bei dem Ausführungsbeispiel nach Figur 3 nicht nur an den Grenzen zu dem schraffierten Bereich auftreten, in dem die implizite Nullregel wirken soll, sondern auch an den Grenzen zwischen den durch explizite Regeln definierten Teilbereichen. Dort liefern die Zugehörigkeitsfunktionen der Eingangsgrößen x1, x2 Wahrheitswerte, die kleiner als Eins sind, was auch zu vergleichbaren Wahrheitswerten für die gesamten Bedingungsteile der explizierten Regeln führt. In diesen Fällen wird die implizite Regel nach Figur 5 aktiv und kann eine ungewollte Veränderung des Reglerverhaltens erzeugen. Dieser Effekt kann, wie in Figur 6 dargestellt, durch eine Abschwächung des mit der impliziten Regel berechneten Wahrheitswertes vermindert werden, ohne dabei den Vorteil der impliziten Regel zu verlieren. In Figur 6 wird dazu der Wahrheitswert W6 des linguistischen Wertes 0 der Ausgangsgröße y nach einer Bewertung durch einen Multiplizierer 4 mit einem Faktor, der kleiner als Eins ist, aus dem Komplement des Maximalwertes der Wahrheitswerte W1 ... W4 expliziter Regeln ermittelt.

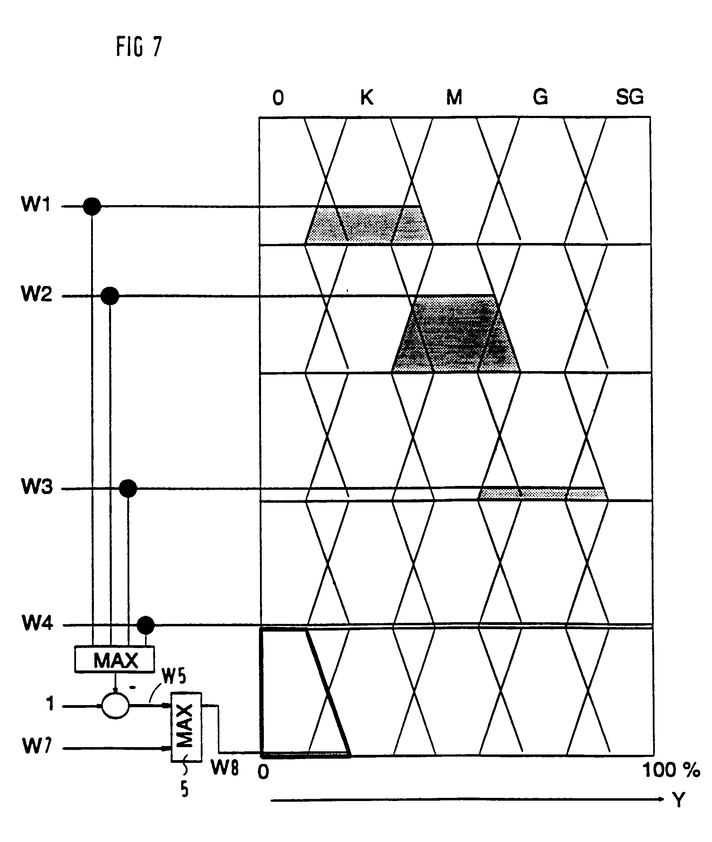

Durch die in Figur 7 dargestellte Einrichtung kann für den durch eine implizite Regel angesprochenen linguistischen Wert 0 der Ausgangsgröße y zusätzlich eine explizite Regel definiert werden, die den Wahrheitswert W7 liefert. Die durch die implizite und die explizite Regel gebildeten Wahrheitswerte W5 und W7 werden einem Maximalwertbildner 5 zugeführt, so daß der größere der beiden als Wahrheitswert W8 wirksam wird.

In einer universellen Struktur einer Einrichtung zur Realisierung einer impliziten Regel werden die durch explizite Regeln ermittelten Wahrheitswerte W1 ... Wn einem Maximalwertbildner 6 zugeführt. Ein Subtrahierer 7 berechnet aus dem Ausgangssignal des Maximalwertbildners 6 das Komplement zu Eins. Das Komplement wird in einem Multiplizierer 8 mit einem Faktor F bewertet, dessen Größe zwischen Null und Eins liegt. Das Ergebnis daraus kann durch Schalter S1 ... Sn auf einen oder mehrere beliebige Maximalwertbildner M1 ... Mn gelegt werden. Da jedem der Maximalwertbildner M1 ... Mn gleichzeitig einer der Wahrheitswerte W1 ...

Wn aufgeschaltet ist, kann das Ergebnis der impliziten Regel zur Berechnung der Inferenz mit einem beliebigen der definierten linguistischen Werte der Ausgangsgröße verwendet werden.

## Patentansprüche

1. Einrichtung zur Vervollständigung einer unvollständigen Regelbasis eines Fuzzy-Reglers mit mindestens einer Ein- und Ausgangsgröße (x1, x2, y), **dadurch gekennzeichnet**,

   - daß die Regelbasis für Kombinationen linguistischer Werte von Eingangsgrößen (x1, x2), welchen durch die Regeln der unvollständigen Regelbasis kein linguistischer Wert einer Ausgangsgröße (y) zugeordnet ist, um eine implizite Regel ergänzt wird, deren Wahrheitswert im Bedingungsteil von den Wahrheitswerten der Bedingungsteile der Regeln der unvollständigen Regelbasis derart abhängt, daß er am größten ist, wenn diese den Wahrheitswert Null liefern, und am kleinsten, wenn diese den Wahrheitswert Eins aufweisen, und die im Folgerungsteil einen vorbestimmten Wert der Ausgangsgröße (y) enthält.

2. Einrichtung nach Anspruch 1, **dadurch gekennzeichnet**,

   - daß der Wahrheitswert des Bedingungsteils der impliziten Regel aus den Wahrheitswerten der Bedingungsteile der Regeln der unvollständigen Regelbasis durch Auswahl des Maximalwertes und durch Bilden des Komplements zum Wert Eins ermittelt wird nach der Formel

   $$W_j = 1 - \max(W_i),$$

   mit

   $i = 1 ... n, i \neq j$,
   $n$ - Anzahl der linguistischen Werte einer Ausgangsgröße,
   $W_j$ - Wahrheitswert der impliziten Regel für den j-ten linguistischen Wert der Ausgangsgröße und
   $W_i$ - Wahrheitswert der Regel der unvollständigen Regelbasis für den i-ten linguistischen Wert der Ausgangsgröße.

3. Einrichtung nach Anspruch 2, **dadurch gekennzeichnet,**

   - daß der Wahrheitswert des Bedingungsteils der impliziten Regel durch einen Bewertungsfaktor (F) abgeschwächt wird.

4. Einrichtung nach einem der vorhergehenden Ansprüche, **dadurch gekennzeichnet**,

   - daß der Wahrheitswert des Bedingungsteils der impliziten Regel mit dem Wahrheitswert des Bedingungsteils einer weiteren Regel der unvollständigen Regelbasis verknüpft wird.

5. Einrichtung nach Anspruch 4, **dadurch gekennzeichnet**,

   - daß der Wahrheitswert des Bedingungsteils der impliziten Regel mit dem Wahrheitswert des Bedingungsteils einer der Regeln der unvollständigen Regelbasis verknüpft und das Ergebnis dieser Verknüpfung als dessen neuer Wahrheitswert verwendet wird.

6. Fuzzy-Regler mit einer Einrichtung zur Vervollständigung einer unvollständigen Regelbasis eines Fuzzy-Reglers augestattet, mit mindestens einer Ein- und Ausgangsgröße (x1, x2, y), **dadurch gekennzeichnet**,

   - daß die Regelbasis für Kombinationen linguistischer Werte der Eingangsgrößen (x1, x2), welchen durch die Regeln der unvollständigen Regelbasis kein linguistischer Wert einer Ausgangsgröße (y) zugeordnet ist, um eine implizite Regel ergänzt wird, deren Wahrheitswert im Bedingungsteil von den Wahrheitswerten der Bedingungsteile der Regeln der unvollständigen Regelbasis derart abhängt, daß er am größten ist, wenn diese den Wahrheitswert Null liefern, und am kleinsten, wenn diese den Wahrheitswert Eins aufweisen, und die im Folgerungsteil einen vorbestimmten Wert der Ausgangsgröße (y) enthält.

7. Fuzzy-Regler nach Anspruch 6, **dadurch gekennzeichnet**,

   - daß der Wahrheitswert des Bedingungsteils der impliziten Regel aus den Wahrheitswerten der Bedingungsteile der Regeln der unvollständigen Regelbasis durch Auswahl des Maximalwertes und durch Bilden des Komplements zum Wert Eins ermittelt wird nach der Formel

   $$W_j = 1 - \max(W_i),$$

   mit

   $i = 1 ... n, i \neq j$,
   $n$ - Anzahl der linguistischen Werte einer

Ausgangsgröße,

$W_j$ - Wahrheitswert der impliziten Regel für den j-ten linguistischen Wert der Ausgangsgröße und

$W_i$ - Wahrheitswert der Regel der unvollständigen Regelbasis für den i-ten linguistischen Wert der Ausgangsgröße.

8. Fuzzy-Regler nach Anspruch 7, **dadurch gekennzeichnet**,

- daß der Wahrheitswert des Bedingungsteils der impliziten Regel durch einen Bewertungsfaktor (F) abgeschwächt wird.

9. Fuzzy-Regler nach einem der vorhergehenden Anspüche 6 bis 8, **dadurch gekennzeichnet**,

- daß der Wahrheitswert des Bedingungsteils der impliziten Regel mit dem Wahrheitswert des Bedingungsteils einer weiteren Regel der unvollständigen Regelbasis verknüpft wird.

10. Fuzzy-Regler nach Anspruch 9, **dadurch gekennzeichnet**,

- daß der Wahrheitswert des Bedingungsteils der impliziten 15 Regel mit dem Wahrheitswert des Bedingungsteils einer der Regeln der unvollständigen Regelbasis verknüpft und das Ergebnis dieser Verknüpfung als dessen neuer Wahrheitswert verwendet wird.

## Claims

1. Device to complete an incomplete rule base of a fuzzy regulator with at least one input and output variable (x1, x2, y), characterized in that the rule base for combinations of linguistic values of the input variables (x1, x2), with which no linguistic value of an output variable (y) is associated by way of the rules of the incomplete rule base, is extended by an implicit rule, the logical value of which in the conditional part depends on the logical values of the conditional parts of the rules of the incomplete rule base in such a way that it is largest when they supply the logical value zero, and smallest when they have the logical value 1, and which in the conclusion part contains a predetermined value of the output variable (y).

2. Device according to claim 1, characterized in that the logical value of the conditional part of the implicit rule is determined from the logical values of the conditional parts of the rules of the incomplete rule base through selection of the maximum value and through formation of the complement to the value 1 according to the formula

$$W_j = 1 - \max (W_i),$$

where

i = 1 … n, i ≠ j,

n - number of linguistic values of an output variable,

$W_j$ - logical value of the implicit rule for the jth linguistic value of the output variable and

$W_i$ - logical value of the rule of the incomplete rule base for the ith linguistic value of the output variable.

3. Device according to claim 2, characterized in that the logical value of the conditional part of the implicit rule is weakened by an evaluation factor (F).

4. Device according to one of the preceding claims, characterized in that the logical value of the conditional part of the implicit rule is connected to the logical value of the conditional part of an additional rule of the incomplete rule base.

5. Device according to claim 4, characterized in that the logical value of the conditional part of the implicit rule is connected to the logical value of the conditional part of one of the rules of the incomplete rule base and the result of this connection is used as its new logical value.

6. Fuzzy regulator equipped with a device to complete an incomplete rule base of a fuzzy regulator, having at least one input and output variable (x1, x2, y), characterized in that the rule base for combinations of linguistic values of the input variables (x1, x2), with which no linguistic value of an output variable (y) is associated by way of the rules of the incomplete rule base, is extended by an implicit rule, the logical value of which in the conditional part depends on the logical values of the conditional parts of the rules of the incomplete rule base in such a way that it is largest when they supply the logical value zero and smallest when they have the logical value 1, and which in the conclusion part contains a predetermined value of the output variable (y).

7. Fuzzy regulator according to claim 6, characterized in that the logical value of the conditional part of the implicit rule is determined from the logical values of the conditional parts of the rules of the incomplete rule base through selection of the maximum value and through formation of the complement to the value 1 according to the formula

$$W_j = 1 - \max(W_i),$$

where

i = 1 ... n, i ≠ j,

n - number of linguistic values of an output variable,

$W_j$ - logical value of the implicit rule for the jth linguistic value of the output variable and

$W_i$ - logical value of the rule of the incomplete rule base for the ith linguistic value of the output variable.

8. Fuzzy regulator according to claim 7, characterized in that the logical value of the conditional part of the implicit rule is weakened by an evaluation factor (F).

9. Fuzzy regulator according to one of the preceding claims 6 to 8, characterized in that the logical value of the conditional part of the implicit rule is connected to the logical value of the conditional part of an additional rule of the incomplete rule base.

10. Fuzzy regulator according to claim 9, characterized in that the logical value of the conditional part of the implicit rule is connected to the logical value of the conditional part of one of the rules of the incomplete rule base and the result of this connection is used as its new logical value.

**Revendications**

1. Dispositif destiné à compléter une base de règles incomplète d'un régulateur Fuzzy comportant au moins une grandeur d'entrée et une grandeur de sortie (x1, x2, y), caractérisé par le fait que,

- la base de règles pour des combinaisons de valeurs linguistiques des grandeurs d'entrée (x1, x2), auxquelles il n'est pas associé de valeur linguistique d'une grandeur de sortie (y) par les règles de la base de règles incomplète, est complétée par une règle implicite, dont la valeur logique dans la partie conditionnelle dépend des valeurs logiques des parties conditionnelles des règles de la base de règles incomplète, de telle sorte qu'elle soit la plus élevée lorsque celles-ci ont la valeur logique zéro, et la plus faible lorsque celles-ci ont la valeur logique un, et qui contient une valeur prédéterminée de la grandeur de sortie (y) dans la partie séquentielle.

2. Dispositif selon la revendication 1, caractérisé par le fait que,

- la valeur logique de la partie conditionnelle de la règle implicite est déterminée à partir des valeurs logiques des parties conditionnelles des règles de la base de règles incomplète, par la sélection de la valeur maximale, et par la formation du complément à la valeur un, selon la formule

$$W_j = 1 - \max(W_i),$$

avec

i = 1 ... n, i ≠ j,

n étant le nombre des valeurs linguistiques d'une grandeur de sortie,

$W_j$ étant la valeur logique de la règle implicite pour la j-ième valeur linguistique de la grandeur de sortie, et

$W_i$ la valeur logique de la règle de la base de règles incomplète pour la i-ième valeur logique de la grandeur de sortie.

3. Dispositif selon la revendication 2, caractérisé par le fait que,

- la valeur logique de la partie conditionnelle de la règle implicite est atténuée par un coefficient de pondération (F).

4. Dispositif selon l'une quelconque des revendications précédentes, caractérisé par le fait que,

- la valeur logique de la partie conditionnelle de la règle implicite est enchaînée à la valeur logique de la partie conditionnelle d'une autre règle de la base de règles incomplète.

5. Dispositif selon la revendication 4, caractérisé par le fait que,

- la valeur logique de la partie conditionnelle de la règle implicite est enchaînée à la valeur logique de la partie conditionnelle de l'une des règles de la base de règles incomplète, et que le résultat de cet enchaînement est utilisé comme nouvelle valeur logique de cette dernière.

6. Régulateur Fuzzy avec un dispositif destiné à compléter une base de règles incomplète d'un régulateur Fuzzy comportant au moins une grandeur d'entrée et une grandeur de sortie (x1, x2, y), caractérisé par le fait que,

- la base de règles pour des combinaisons de valeurs linguistiques des grandeurs d'entrée (x1, x2), auxquelles il n'est pas associé de valeur linguistique d'une grandeur de sortie (y) par les règles de la base de règles incomplète, est complétée par une règle implicite, dont la valeur logique dans la partie conditionnelle dépend des valeurs logiques des parties conditionnelles des règles de la base de règles incomplète, de telle sorte qu'elle soit la plus élevée lorsque celles-ci délivrent la valeur logique zéro, et la plus faible lorsque celles-ci ont la valeur logique un, et qui contient une valeur prédéterminée de la grandeur de sortie (y) dans la partie séquentielle.

7. Régulateur Fuzzy selon la revendication 6, caractérisé par le fait que,

- la valeur logique de la partie conditionnelle de la règle implicite est déterminée à partir des valeurs logiques des parties conditionnelles des règles de la base de règles incomplète, par la sélection de la valeur maximale, et par la formation du complément à la valeur un, selon la formule

$$W_j = 1 - \max(W_i),$$

avec

$i = 1 \ldots n,\ i \neq j$,
n étant le nombre des valeurs linguistiques d'une grandeur de sortie,
$W_j$ étant la valeur logique de la règle implicite pour la j-ième valeur linguistique de la grandeur de sortie, et
$W_i$ la valeur logique de la règle de la base de règles incomplète pour la i-ième valeur logique de la grandeur de sortie.

8. Régulateur Fuzzy selon la revendication 7, caractérisé par le fait que,

- la valeur logique de la partie conditionnelle de la règle implicite est atténuée par un coefficient de pondération (F).

9. Régulateur Fuzzy selon l'une quelconque des revendications 6 à 8, caractérisé par le fait que,

- la valeur logique de la partie conditionnelle de la règle implicite est enchaînée à la valeur logique de la partie conditionnelle d'une autre règle de la base de règles incomplète.

10. Régulateur Fuzzy selon la revendication 9, caractérisé par le fait que,

- la valeur logique de la partie conditionnelle de la règle implicite est enchaînée à la valeur logique de la partie conditionnelle de l'une des règles de la base de règles incomplète, et que le résultat de cet enchaînement est utilisé comme nouvelle valeur logique de cette dernière.

FIG 1

FIG 2

## FIG 3

FIG 4

FIG 5

FIG 6

# FIG 7

FIG 8